# FASCICULE DE BREVET EUROPEEN

(11) **EP 2 146 128 B1**
(45) Date de publication et mention de la délivrance du brevet: **01.12.2010**
(21) Numéro de dépôt: 09290540.5
(22) Date de dépôt: 06.07.2009
(51) Int. Cl.: F16L 33/207

(54) **flexible pour circuit de climatisation ou de direction assistee de vehicule automobile**
Schlauch für Klimaanlage oder Servolenkung eines Kraftfahrzeugs
Hose for an automobile air-conditioning or power-steering circuit

(30) Priorité: 17.07.2008 FR 0804064
(43) Date de publication de la demande: 20.01.2010
(73) Titulaire: Hutchinson, 75008 Paris (FR)
(72) Inventeur: Rabillon, Laurent, 45210 La Selle en Hermay (FR)
(74) Mandataire: Bolinches, Michel Jean-Marie

(56) Documents cités:
- WO-A-02/08677
- FR-A- 2 878 014
- GB-A- 651 030
- GB-A- 1 065 480

## Description

La présente invention concerne un flexible en particulier pour un circuit de climatisation ou de direction assistée de véhicule automobile, et un tel circuit l'incorporant. L'invention s'applique notamment, mais pas nécessairement, à un flexible basse pression pour un circuit de climatisation.

D'une manière générale, les circuits de climatisation et les circuits de direction assistée pour véhicules automobiles comprennent des flexibles comportant des éléments tubulaires rigides sous la forme de tubes métalliques, par exemple en aluminium, et des éléments tubulaires souples typiquement formés de tuyaux multicouches à base de caoutchouc pour permettre la prise de rayons le long du flexible.

Le document FR-A-2 878 014 décrit par exemple de tels flexibles, où le raccordement entre éléments tubulaires respectivement souple et rigide est réalisé par l'intermédiaire d'une garniture d'étanchéité élastomère surmoulée dans une gorge de l'élément rigide, radialement entre ce dernier et l'élément souple, lequel est enserré par une bague métallique de sertissage de ce raccordement que l'on positionne sur l'élément rigide via un bossage de ce dernier.

Un inconvénient majeur des flexibles existants réside dans la lourdeur des opérations de façonnage, d'usinage et d'assemblage des tubes métalliques formant ces éléments tubulaires rigides, notamment lorsque ces derniers doivent présenter un cintrage en une extrémité de flexible formant bride de fixation au circuit correspondant. Il en résulte un coût global de fabrication et d'assemblage relativement élevé pour ces flexibles.

Un autre inconvénient de ces flexibles connus réside dans les copeaux métalliques indésirables pouvant être générés par la mise en forme de ces tubes métalliques.

Un but de la présente invention est de proposer un flexible destiné à véhiculer un fluide dans un circuit, en particulier de climatisation ou de direction assistée d'un véhicule automobile, ce flexible comprenant au moins un élément tubulaire rigide relié en l'une au moins de ses extrémités de raccordement à un élément tubulaire souple via un sertissage d'une douille métallique, qui remédie à ces inconvénients.

A cet effet, cet élément tubulaire rigide est réalisé en un matériau plastique et possède au moins une extrémité de raccordement revêtue d'une garniture d'étanchéité qui est formée d'un seul tenant avec cet élément rigide et de dureté inférieure à celle de ce matériau plastique, la garniture s'étendant sur la face radialement externe de cette extrémité de raccordement axial.

On notera que l'utilisation de ce matériau plastique pour le ou chaque élément tubulaire rigide permet notamment de réduire le coût de fabrication du flexible correspondant, en comparaison des flexibles de l'art antérieur à éléments tubulaires métalliques. En effet, ce matériau plastique permet de façonner le ou chaque élément tubulaire rigide au moyen d'un moulage par injection, facilitant ainsi l'obtention d'un ou de plusieurs tronçons cintrés pour chacun de ces éléments avec un rayon de courbure prédéterminé par l'empreinte du moule.

Egalement avantageusement, on notera en outre que ce matériau plastique injecté permet la mise en oeuvre d'une étape de bi-injection (i.e. d'injection bi-matière, ou de co-injection) pour rendre la garniture d'étanchéité solidaire de l'extrémité de raccordement correspondante dudit ou de l'un au moins desdits élément(s) tubulaire(s) rigide(s) en matériau plastique, à titre d'alternative au surmoulage de ce dernier par la garniture, qui est également possible avec la présente invention.

Selon une autre caractéristique de l'invention, cet élément tubulaire rigide est en outre pourvu d'au moins deux inserts métalliques respectivement en ses deux extrémités de raccordement axial, l'un au moins de ces inserts étant un insert de renforcement conférant à l'élément rigide une résistance mécanique à la compression suffisante pour le sertissage de ladite douille, cet insert de renforcement étant de préférence formé d'un anneau inséré contre la face radialement interne de l'extrémité de raccordement correspondante.

Dans un premier mode de réalisation de l'élément tubulaire rigide selon l'invention, chacun de ces deux inserts est un insert de renforcement pour le sertissage de la douille, l'élément rigide l'incorporant étant alors une portion intermédiaire dans le flexible (par exemple rectiligne) qui se termine par deux desdites extrémités de raccordement, raccordées axialement à deux éléments tubulaires souples du flexible.

On notera que ces inserts métalliques permettent d'empêcher un affaissement ou une cassure éventuels de l'élément rigide en matière plastique, dû à l'écrasement de ce dernier lors de l'opération de sertissage via la douille de raccordement.

On notera également que cet élément rigide formant portion intermédiaire du flexible, qui est avantageusement moulé par injection d'un matériau plastique, peut être rectiligne ou bien présenter un ou plusieurs coudes ou sections cintrées obtenues par moulage.

Dans un second mode de réalisation de l'élément tubulaire rigide selon l'invention, l'un de ces deux inserts est un insert de renforcement pour le sertissage de la douille en une première extrémité de raccordement axial de cet élément rigide, et l'autre insert est un insert de maintien conçu pour maintenir à l'état vissé un organe de fixation équipant une bride de fixation montée en une seconde extrémité de raccordement axial de ce même élément rigide, lequel constitue dans ce cas une portion d'extrémité du flexible présentant une forme arrondie sensiblement en L ou en U.

Conformément à ce second mode, ladite première extrémité de raccordement raccorde cet élément rigide coudé à l'élément tubulaire souple pourvue de la douille, dudit insert de renforcement et en option de ladite garniture d'étanchéité, et ladite seconde extrémité de raccordement comprenant ladite garniture d'étanchéité est adaptée pour être fixée à un organe de mise en mouvement du fluide circulant dans le circuit par l'intermédiaire de ladite bride de fixation.

On notera que cet élément tubulaire rigide moulé formant portion d'extrémité avec une bride de fixation permet de réaliser une économie substantielle pour la fabrication du flexible selon ce second mode de l'invention, en comparaison des éléments rigides d'extrémités connus typiquement préformés en aluminium.

On notera également qu'une portion d'extrémité formée de deux tronçons rectilignes faisant un angle sensiblement droit entre eux, qui peut être obtenue par moulage, présente l'avantage d'impliquer un encombrement moindre que des portions rigides en arrondi obtenues par cintrage (i.e avec un rayon de courbure) dont le rayon de cintrage est de l'ordre de grandeur de la dimension de la tubulure.

Selon une autre caractéristique de ce second mode de l'invention, ladite bride de fixation peut avantageusement comprendre un embout qui est recouvert d'un joint d'étanchéité de section annulaire formant ladite garniture et formé d'un seul tenant avec cet embout, et un orifice lisse ou fileté pour la fixation de cette bride qui est revêtu sur sa face interne dudit insert de maintien apte à s'opposer au fluage du matériau plastique, pour le maintien à l'état vissé dudit organe de fixation.

Selon un exemple de mise en oeuvre de ce second mode selon l'invention, ledit joint est venu de moulage par bi-injection ou par surmoulage avec ledit embout, ce joint présentant une face radialement interne solidaire de cet embout et une face radialement externe qui comprend une portion d'étanchéité en partie sensiblement torique, laquelle forme une extrémité axialement interne du joint sur ledit embout et présente un diamètre externe maximal pour ce joint, de telle sorte que ce joint soit exempt de plan de joint suite au démoulage, lequel est alors réalisé en force, axialement vers l'extérieur de cet embout.

Selon une variante de mise en oeuvre de ce second mode selon l'invention, ledit joint est solidarisé avec ledit embout via un surmoulage, de sorte qu'une partie seulement de ce joint soit solidaire de l'extrémité libre de cet embout, et que la partie restante du joint soit retournée contre l'embout et axialement vers l'intérieur de ce dernier, cette partie restante étant dépourvue de plan de joint de démoulage.

On notera que cette formation d'un seul tenant dudit joint avec le ou chaque embout de la bride moulée, que ce soit par bi-injection ou par surmoulage, permet une économie substantielle du nombre de pièces à fabriquer dans le flexible de l'invention, en comparaison des flexibles connus avec des brides de fixation métalliques à joints toriques rapportés, notamment.

Avantageusement selon ce premier mode ou selon ce second mode, l'extrémité de raccordement pourvue de la douille que comprend la portion intermédiaire ou la portion d'extrémité formée par l'élément rigide peut comporter une pluralité de lamelles élastiques espacées dans la direction circonférentielle, qui sont venues de moulage avec l'élément tubulaire rigide correspondant et qui sont aptes à permettre le positionnement axial et le maintien en position de ladite douille autour de cette extrémité de raccordement. Ces lamelles ou ergots sont par exemple au nombre de deux et présentent de préférence une forme allongée s'étendant en saillie dans la direction axiale de l'élément tubulaire rigide.

On notera que ces moyens de positionnement élastiques venus de moulage avec l'élément rigide facilitent le positionnement de la douille après qu'elle a été emmanchée sur ce dernier, en comparaison du montage actuel de cette douille sur un tube en aluminium typiquement réalisé par un formage « Coupling ».

D'une manière générale en référence aux premier et second modes précités selon l'invention, ledit ou l'un au moins desdits élément(s) tubulaire(s) rigide(s) peut être réalisé en un matériau à base d'au moins un polymère thermoplastique, tel qu'un polyamide (e.g. un PA 6.6) renforcé par des fibres de verre, ou bien à base d'au moins un polymère thermodurcissable tel qu'une résine phénolique éventuellement renforcée par des fibres, à titre non limitatif. Quant à la ou chaque garniture d'étanchéité, elle peut avantageusement être réalisée en un matériau à base d'au moins :
- un polymère thermoplastique cellulaire, ou
- un élastomère, en particulier un caoutchouc tel qu'un caoutchouc nitrile hydrogéné (HNBR) ou un terpolymère éthylène-propylène-diène (EPDM), ou bien un élastomère thermoplastique tel qu'un vulcanisat thermoplastique (TPV).

Un circuit de climatisation ou de direction assistée pour véhicule automobile selon l'invention comporte au moins un flexible tel que défini ci-dessus en relation avec la présente invention.

Avantageusement, ce flexible peut être intégré à une boucle basse pression d'un circuit de climatisation, ledit ou l'un au moins desdits élément(s) tubulaire(s) rigide(s) en matériau plastique formant par exemple un raccordement basse pression avec la sortie d'un détendeur de ce circuit.

D'autres caractéristiques, avantages et détails de la présente invention ressortiront à la lecture de la description suivante d'un exemple de réalisation de l'invention, donné à titre illustratif et non limitatif, ladite description étant réalisée en référence avec les dessins joints, parmi lesquels :
la figure 1 est une vue partielle en perspective d'un flexible pour circuit de climatisation selon un exemple de l'invention, comportant un élément tubulaire souple auquel sont raccordés deux éléments tubulaires rigides respectivement selon les premier et second mode de l'invention,
la figure 2 est une vue en perspective d'un élément tubulaire rigide selon le second mode de l'invention, formant portion d'extrémité du flexible de la figure 1 et notamment pourvu d'une douille de sertissage à son extrémité de raccordement au reste du flexible,
la figure 3 est une vue partielle de détail en demi-coupe axiale de l'extrémité de raccordement de l'élément tubulaire rigide de la figure 2 pourvue de cette douille selon un exemple de réalisation de l'invention,
la figure 4 est une vue partielle en perspective de l'extrémité de raccordement de la figure 3, où la douille de sertissage est représentée en écorché sur sa demi-circonférence,
la figure 5 est une vue en perspective de la bride de fixation formée par l'élément tubulaire rigide de la figure 2, cette bride portant un embout revêtu d'un joint d'étanchéité pour assurer une fixation étanche,
la figure 6 est une vue schématique partielle en demi-coupe axiale de l'embout de la figure 5, suite au surmoulage de cet embout par ce joint,
la figure 7 est une vue une vue schématique partielle en demi-coupe axiale de l'embout de la figure 6, montrant le montage de ce joint autour de cet embout ainsi surmoulé,
la figure 8 est une vue schématique partielle en demi-coupe axiale, selon une variante de la figure 6, d'un moule d'injection contenant un embout porté par la bride de fixation de la figure 5 avec lequel on a solidarisé un joint d'étanchéité, par exemple par bi-injection,
la figure 9 est une vue en coupe axiale de l'élément tubulaire rigide de la figure 2 formant portion d'extrémité, avant montage de la douille de sertissage et après solidarisation de ce joint d'étanchéité,
la figure 10 est une vue en coupe transversale de cet élément rigide formant portion d'extrémité dans le plan X-X de la figure 9, montrant la bride de fixation équipant cet élément rigide, et
la figure 11 est une vue schématique en coupe transversale d'un élément tubulaire rigide selon un exemple du premier mode de réalisation de l'invention, cet élément se prolongeant par une patte de fixation pourvue d'une garniture de découplage mécanique.

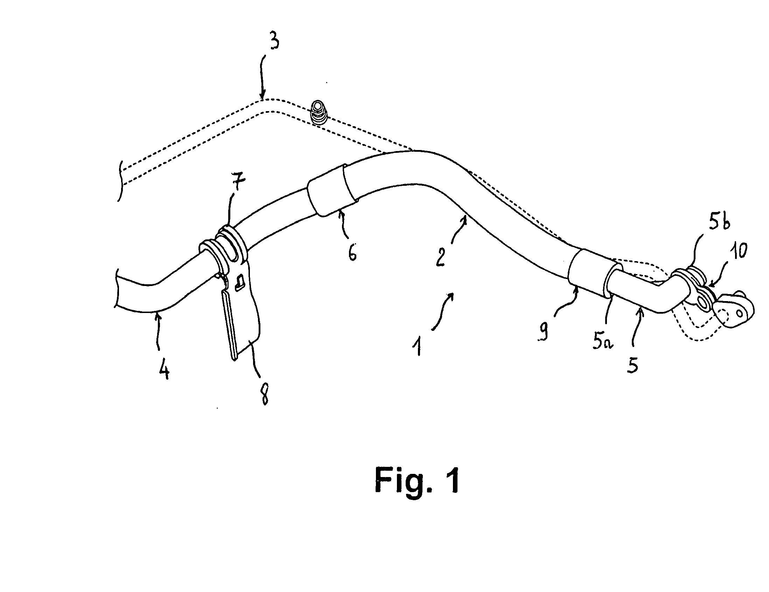

Le flexible 1 illustré à titre d'exemple à la figure 1 est du type utilisé pour une boucle basse pression d'un circuit de climatisation pour véhicule automobile, comportant de manière connue un élément tubulaire souple 2 de type tuyau en caoutchouc formant canalisation basse pression (la canalisation haute pression 3 étant représentée partiellement en pointillés), aux deux extrémités duquel sont respectivement raccordés par sertissage un élément tubulaire rigide intermédiaire 4 et un élément tubulaire rigide d'extrémité 5, ce dernier étant par exemple destiné à être fixé à la sortie d'un détendeur (non représenté).

L'élément rigide intermédiaire 4 est raccordé au tuyau souple 2 par une douille de sertissage 6 entourant une garniture d'étanchéité (non visible), et il est pourvu d'un collier 7 solidaire d'une patte de fixation 8 au reste du circuit. Ce collier 7 et cette patte 8 sont avantageusement formés d'un seul tenant avec cet élément intermédiaire 4, par surmoulage ou par bi-injection.

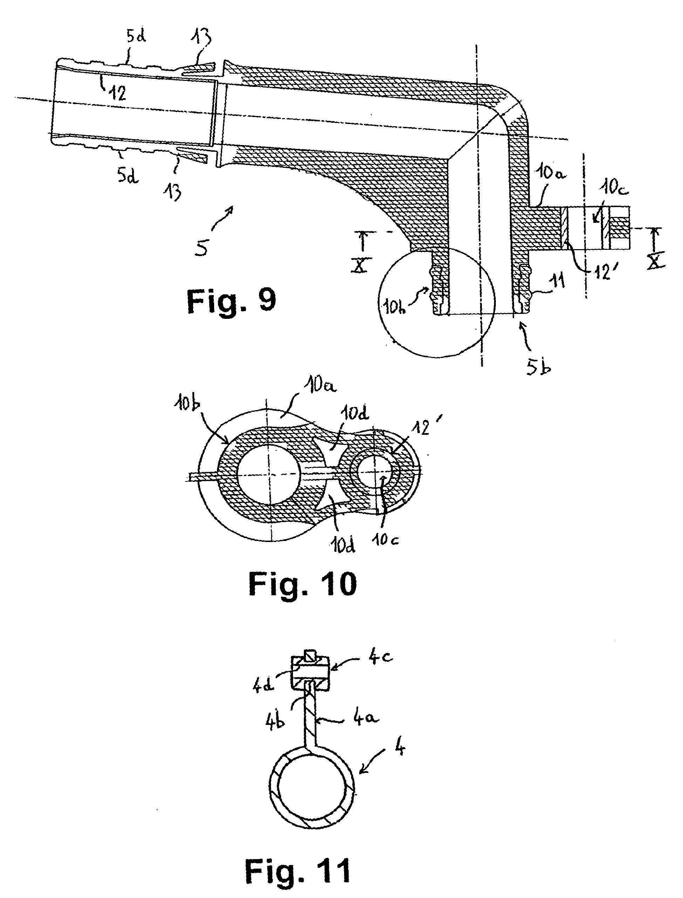

Comme illustré à la figure 11, l'élément rigide intermédiaire 4, réalisé en un matériau plastique (e.g. à base d'un polyamide 6.6), peut être par exemple pourvu d'une patte radiale de fixation 4a constituée du même matériau et présentant un orifice traversant 4b rempli d'une garniture de découplage mécanique 4c. Selon l'invention, la garniture 4c est formée d'un seul tenant avec cet élément rigide 4 par bi-injection ou par surmoulage, et elle est constituée d'une matière de dureté Shore inférieure à cette de ce matériau plastique (e.g. d'un polymère thermoplastique cellulaire ou d'un élastomère). Dans l'exemple de la figure 11, cette garniture présente en section une forme de « H » présentant un orifice traversant 4d pouvant recevoir un organe de fixation, mais pourrait présenter toute autre forme appropriée.

Selon l'invention, l'élément rigide intermédiaire 4 et l'élément rigide d'extrémité 5 peuvent être avantageusement réalisés (indépendamment l'un de l'autre) en un matériau plastique rigide moulé par injection, tel que par exemple un polyamide 6.6 renforcé par des fibres de verre, en lieu et place des matériaux métalliques tels que l'aluminium utilisés à ce jour pour ces éléments rigides. De plus, la garniture de découplage mécanique 4c ou d'étanchéité 11 selon l'invention équipant chaque extrémité de raccordement 5a, 5b de ces éléments rigides 4 et 5 est avantageusement formée d'un seul tenant avec l'élément rigide 4, 5 correspondant, par un procédé de bi-injection ou de surmoulage d'une matière de dureté Shore inférieure à cette de ce matériau plastique rigide. A titre exemplatif et indépendamment l'une de l'autre, ces garnitures peuvent être réalisées en un polymère thermoplastique cellulaire, ou en un élastomère, que ce soit un caoutchouc diénique ou un vulcanisat thermoplastique (TPV), par exemple.

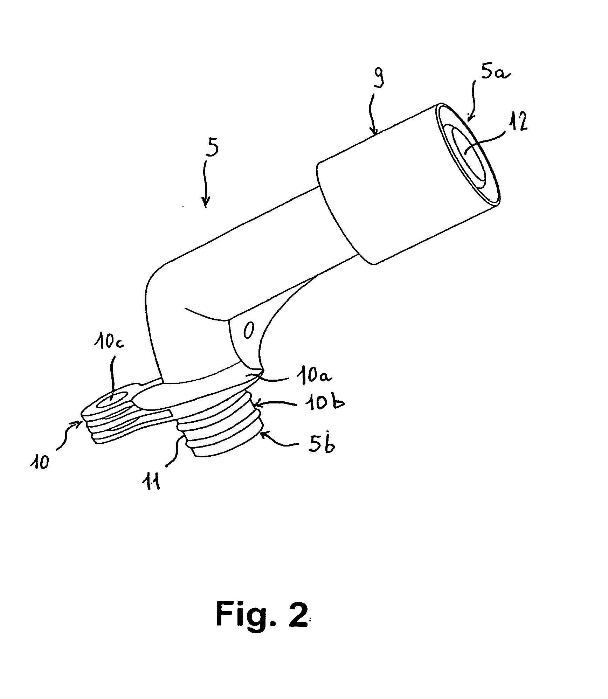

L'élément rigide d'extrémité 5 illustré aux figures 2 et 9 présente une forme sensiblement en « L » pour une longueur relativement réduite, par exemple comprise entre 100 mm et 200 mm. Cet élément 5 comporte, à son extrémité de raccordement interne 5a avec le tuyau souple, outre la douille 9 sur sa face radialement externe, un insert métallique 12 par exemple cylindrique sur sa face radialement interne qui est nécessaire pour conférer à l'élément rigide 5 une résistance mécanique à la compression suffisante lors du sertissage de la douille 9.

L'extrémité de raccordement interne 5a de l'élément rigide d'extrémité 5 est enserrée par une douille de sertissage 9 pour son raccordement au tuyau souple 2. Cet élément d'extrémité 5 présente une extrémité de raccordement externe 5b formée par une bride de fixation 10 dont une collerette 10a porte un embout 10b sur lequel est destiné à être montée de manière étanche, via une seconde garniture d'étanchéité 11), une tubulure de connexion (non illustrée) d'un organe de mise en mouvement du fluide circulant dans le circuit, tel que le détendeur précité.

La collerette 10a de la bride 10 est visible en coupe transversale à la figure 10, et elle comporte dans cet exemple une géométrie sensiblement de forme ovoïdale avec :
- une portion circulaire de diamètre maximal d'où part l'embout 10b,
- une portion circulaire de diamètre minimal munie de l'orifice 10c qui est destiné à la fixation de la bride 10 et qui est revêtu d'un insert métallique de maintien 12' (visible aux figures 9 et 10) apte à s'opposer au fluage du matériau plastique de la bride 10 pour le maintien à l'état vissé d'un organe de fixation dans cet orifice 10c, et
- deux trous borgnes 10d formés sur la collerette 10a qui sont localisés entre l'axe de l'embout 10b et celui de l'orifice 10c, respectivement de part et d'autre de la droite perpendiculaire à ces deux axes (les trous 10d étant symétriques l'un de l'autre par rapport à cette droite), et qui sont conçus pour empêcher le gauchissement de la bride 10 après son démoulage.

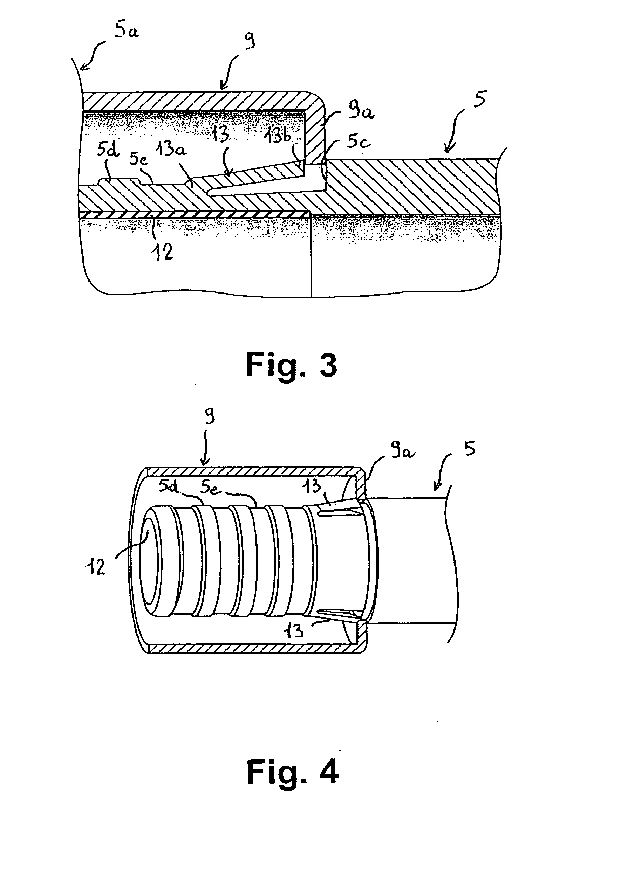

Les figures 3 et 4 illustrent le montage de la douille 9 sur cette extrémité de raccordement 5a de l'élément rigide d'extrémité 5, que l'on effectue dans cet exemple selon l'invention via un montage en butée à l'arrière de deux lamelles élastiques axiales 13 diamétralement opposées qui sont chacune solidaires par leur extrémité avant 13a de l'élément 5 en étant montées libres radialement à l'extérieur de ce dernier par leur extrémité arrière 13b, et qui sont toutes deux venues de moulage avec l'élément rigide 5 (voir figure 4). Chaque lamelle 13, en quelque sorte articulée sur l'élément 5 via son extrémité avant 13a, permet le positionnement axial et le maintien en position de la paroi d'extrémité radiale 9a de la douille 9 venant au contact de cet élément 5. Plus précisément et comme visible à la figure 4, on vient coincer à cet effet la paroi d'extrémité 9a de la douille 9 axialement entre l'extrémité arrière 13b de chaque lamelle 13 et un épaulement circonférentiel 5c de l'élément 5 qui est formé de manière adjacente à cette extrémité arrière 13b.

Une succession de nervures 5d et de rainures 5e radiales est optionnellement formée lors du moulage de l'élément 5 sur la face radialement externe de l'extrémité de raccordement interne 5a de cet élément 5, et optionnellement la première garniture d'étanchéité (non représentée) équipant cette extrémité de raccordement 5a est avantageusement moulée par bi-injection ou bien surmoulée sur ces nervures 5d et rainures 5e de sorte à être solidaire de celles-ci sur toute leur périphérie. En variante, on notera que cette première garniture, par définition plus molle que le matériau constituant cet élément 5, pourrait être directement surmoulée ou bi-injectée sur la périphérie de cette extrémité de raccordement 5a en lieu et place de ces nervures 5d et rainures 5e.

L'élément rigide d'extrémité 5 moulé par injection est de préférence démoulé par deux broches intérieures avantageusement coniques, afin de faciliter l'opération de démoulage. Concernant plus particulièrement ces lamelles élastiques 13 de positionnement de la douille de sertissage 9, elles sont avantageusement positionnées normalement au plan de joint de démoulage.

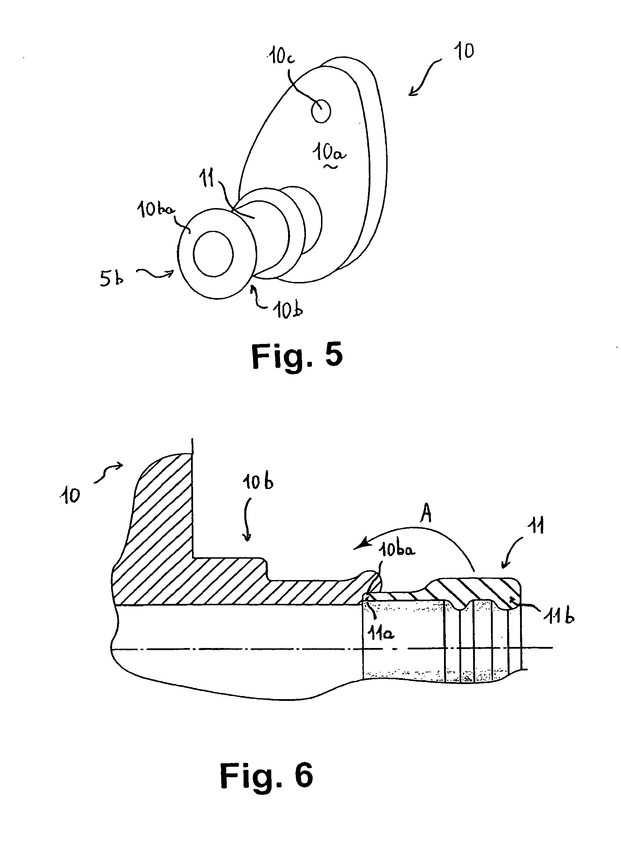

Les figures 6 à 8, prises en relation avec la figure 5 qui montre la partie de l'élément rigide d'extrémité 5 de la figure 2 formant bride de fixation 10 via l'embout tubulaire 10b de cette bride 10 qui est revêtu de la seconde garniture d'étanchéité 11 de section annulaire, illustrent deux exemples de formation d'un seul tenant de la garniture 11 avec l'embout 10b.

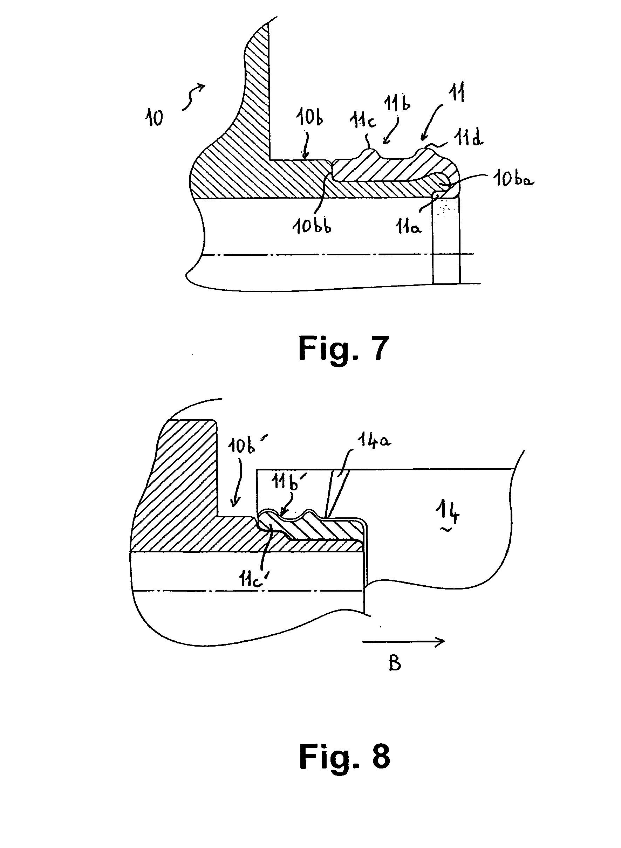

Selon le premier exemple de l'invention dont deux phases de montage de cette garniture 11 sont respectivement illustrées aux figures 6 et 7, on procède dans une première étape illustrée à la figure 6 à un surmoulage de l'extrémité de connexion 5b de cet embout 10b, lequel est pourvu au préalable d'un insert métallique radialement interne (non représenté), par la matière plus molle destinée à constituer cette garniture 11. Via l'utilisation d'une empreinte appropriée à l'intérieur du moule d'injection, on fait en sorte que la garniture 11 ainsi surmoulée ne soit solidaire de l'embout 10b qu'en l'une de ses extrémités axiales 11a qui vient adhérer localement à un épaulement 10ba formé à l'extrémité de l'embout 10b, le reste de la garniture 11 étant totalement dégagé de cet embout 10b. Quant à la partie d'étanchéité 11 b de la garniture 11 qui est globalement opposée à l'extrémité 11 a de la garniture 11 ainsi solidarisée avec l'embout 10b, elle présente dans cet exemple deux renflements radiaux circonférentiels 11c et 11d sensiblement toriques.

Dans une seconde étape illustrée par la flèche A de la figure 6 et dont le résultat est visible à la figure 7, on procède au retournement (à la manière d'une chaussette) du reste de la garniture 11 non solidarisée avec l'embout 10b axialement vers l'intérieur de ce dernier, de telle manière que la partie d'étanchéité 11b de cette garniture 11 vienne se plaquer sur la paroi radialement externe de l'embout 10b. Comme visible dans l'exemple de réalisation de la figure 7, la partie d'étanchéité 11b de la garniture 11 ainsi plaquée par retournement se termine au-delà des deux renflements toriques 11c et 11d et est montée en butée contre un épaulement axialement interne 10bb de l'embout 10b, pour le calage de la garniture 11 sur ce dernier.

On notera que ce premier exemple de l'invention faisant appel au retournement de la garniture 11 localement surmoulée sur l'embout 10b présente notamment comme avantage d'éviter la présence d'un plan de joint de démoulage sur cette garniture 11.

Selon le second exemple de l'invention illustré schématiquement à la figure 8, on procède à un surmoulage de l'embout 10b' par la matière plus molle de la garniture 11' ou bien à une bi-injection des matériaux respectifs de l'embout 10b' et de la garniture 11' en prévoyant dans le moule d'injection 14 un canal d'injection 14a en « point bas », i.e. dans la partie du profil de la garniture 11' dont la valeur du diamètre extérieur n'est pas la plus élevée, afin de ne pas dégrader la zone d'étanchéité 11b' de cette garniture 11' (laquelle zone 11b' comprend un renflement axialement interne 11c' sensiblement torique pour assurer cette étanchéité, dont le diamètre extérieur est maximal pour la garniture 11'). Comme indiqué par la flèche B de la figure 8, on procède ensuite à un démoulage en force pour extraire du moule 14 la garniture 11' ainsi solidarisée avec l'embout 10b'.

## Revendications

1. Flexible (1) destiné à véhiculer un fluide dans un circuit, en particulier de climatisation ou de direction assistée d'un véhicule automobile, ce flexible comprenant au moins un élément tubulaire rigide (4, 5) relié en l'une au moins de ses extrémités de raccordement à un élément tubulaire souple (2) via un sertissage d'une douille métallique (6, 9), **caractérisé en ce que** cet élément tubulaire rigide est réalisé en un matériau plastique et possède au moins une extrémité de raccordement revêtue d'une garniture d'étanchéité (11) qui est formée d'un seul tenant avec cet élément rigide et de dureté inférieure à celle de ce matériau plastique, la garniture s'étendant sur la face radialement externe de cette extrémité de raccordement axial.

2. Flexible (1) selon la revendication 1, **caractérisé en ce que** cet élément tubulaire rigide (4, 5) est moulé par injection, ladite garniture étant solidaire de ladite ou de chaque extrémité de raccordement (5a) par un surmoulage ou un moulage par bi-injection.

3. Flexible (1) selon la revendication 1 ou 2, **caractérisé en ce que** cet élément tubulaire rigide est en outre pourvu d'au moins deux inserts métalliques (12, 12') respectivement en ses deux extrémités de raccordement axial, l'un au moins de ces inserts étant un insert de renforcement (12) conférant à l'élément rigide une résistance mécanique à la compression suffisante pour le sertissage de ladite douille (9), cet insert de renforcement étant de préférence formé d'un anneau inséré contre la face radialement interne de l'extrémité de raccordement correspondante.

4. Flexible (1) selon la revendication 3, **caractérisé en ce que** chacun de ces deux inserts est un insert de renforcement (12) pour le sertissage de la douille (9), l'élément rigide l'incorporant étant une portion intermédiaire dans le flexible qui se termine par deux desdites extrémités de raccordement pourvues chacune de ladite garniture d'étanchéité et raccordées axialement à deux éléments tubulaires souples (2) du flexible.

5. Flexible selon la revendication 3, **caractérisé en ce que** l'un de ces deux inserts est un insert de renforcement (12) pour le sertissage de la douille (9) en une première extrémité de raccordement axial de cet élément rigide, et **en ce que** l'autre insert est un insert de maintien (12') conçu pour maintenir à l'état vissé un organe de fixation équipant une bride de fixation (10) montée en une seconde extrémité de raccordement axial de ce même élément rigide, lequel est une portion d'extrémité du flexible présentant une forme sensiblement en L ou en U.

6. Flexible (1) selon la revendication 5, **caractérisé en ce que** ladite première extrémité de raccordement (5a) raccorde cet élément rigide d'extrémité à l'élément tubulaire souple (2) pourvue de la douille (9), dudit insert de renforcement (12) et optionnellement de ladite garniture d'étanchéité, et **en ce que** ladite seconde extrémité de raccordement comprenant ladite garniture d'étanchéité est adaptée pour être fixée à un organe de mise en mouvement du fluide circulant dans le circuit par l'intermédiaire de ladite bride de fixation (10).

7. Flexible (1) selon la revendication 6, **caractérisé en ce que** ladite bride de fixation (10) comprend un embout (10b, 10b') qui est recouvert d'un joint d'étanchéité (11, 11') de section annulaire formant ladite garniture et formé d'un seul tenant avec cet embout, et un orifice (10c) lisse ou fileté pour la fixation de cette bride qui est revêtu sur sa face interne dudit insert de maintien apte à s'opposer au fluage du matériau plastique, pour le maintien à l'état vissé dudit organe de fixation.

8. Flexible (1) selon la revendication 7, **caractérisé en ce que** ledit joint (11') est venu de moulage par bi-injection ou par surmoulage avec ledit embout (10b'), ce joint présentant une face radialement interne solidaire de cet embout et une face radialement externe qui comprend une portion d'étanchéité (11b') en partie sensiblement torique, laquelle forme une extrémité axialement interne du joint sur ledit embout et présente un diamètre externe maximal pour ce joint, de telle sorte que ce joint soit exempt de plan de joint de démoulage.

9. Flexible (1) selon la revendication 7, **caractérisé en ce que** ledit joint (11) est solidarisé avec ledit embout (10b) via un surmoulage, de sorte qu'une partie seulement de ce joint soit solidaire de l'extrémité libre (10ba) de cet embout, et que la partie restante du joint soit retournée contre l'embout et axialement vers l'intérieur de ce dernier, cette partie restante étant dépourvue de plan de joint de démoulage.

10. Flexible (1) selon une des revendications 4 à 9, **caractérisé en ce que** ladite extrémité de raccordement (5a) pourvue de la douille (10) que comprend la portion intermédiaire ou d'extrémité formée par l'élément rigide comporte une pluralité de lamelles élastiques (13) espacées dans la direction circonférentielle, qui sont venues de moulage avec l'élément tubulaire rigide (5) correspondant et qui sont aptes à permettre le positionnement axial et le maintien en position de la douille (9) autour de cette extrémité de raccordement.

11. Flexible (1) selon une des revendications précédentes, **caractérisé en ce que** ledit ou l'un au moins desdits élément(s) tubulaire(s) rigide(s) (4, 5) est réalisé en un matériau à base d'au moins un polymère thermoplastique, tel qu'un polyamide renforcé par des fibres de verre, et **en ce que** ladite ou chaque garniture d'étanchéité est réalisée en un matériau à base d'au moins :
- un polymère thermoplastique cellulaire, ou
- un élastomère, en particulier un caoutchouc tel qu'un caoutchouc nitrile hydrogéné (HNBR) ou un terpolymère éthylène-propylène-diène (EPDM), ou bien un élastomère thermoplastique tel qu'un vulcanisat thermoplastique (TPV).

12. Circuit de climatisation ou de direction assistée pour véhicule automobile, **caractérisé en ce qu'**il comporte au moins un flexible (1) selon une des revendications précédentes.

13. Circuit de climatisation selon la revendication 12, **caractérisé en ce que** ledit flexible (1) est intégré à une boucle basse pression de ce circuit de climatisation, ledit ou l'un au moins desdits élément(s) tubulaire(s) rigide(s) (5) en matériau plastique formant par exemple un raccordement basse pression avec la sortie d'un détendeur de ce circuit.

## Claims

1. Hose (1) for conveying a fluid through a circuit, in particular an air conditioning system or power steering system of an automotive vehicle, this hose comprising at least one rigid tubular element (4, 5) connected by at least one of its connector ends to a flexible tubular element (2) via a metal crimping sleeve (6, 9), **characterised in that** this rigid tubular element is made from a plastic material and has at least one connector end lined with a sealing gasket (11) formed integrally with this rigid element and of a lesser hardness than that of this plastic material, which fitting extends across the radially external face of this axial connector end.

2. Hose (1) as claimed in claim 1, **characterised in that** this rigid tubular element (4, 5) is made by an injection moulding process, said fitting being made integrally with said or each connector end (5a) by an overmoulding process or a bi-injection moulding process.

3. Hose (1) as claimed in claim 1 or 2, **characterised in that** this rigid tubular element is also provided with at least two metal inserts (12, 12') at its two axial connector ends respectively, at least one of these inserts being a reinforcing insert (12) imparting to the rigid element sufficient mechanical resistance to withstand compression for the crimping of said sleeve (9), this reinforcing insert preferably being formed by a ring inserted against the radially internal face of the corresponding connector end.

4. Hose (1) as claimed in claim 3, **characterised in that** each of these two inserts is a reinforcing insert (12) for the crimping of the sleeve (9), the rigid element incorporating it being an intermediate portion in the hose which is terminated by two of said connector ends, each provided with said sealing gasket and axially connected to two flexible tubular elements (2) of the hose.

5. Hose as claimed in claim 3, **characterised in that** one of these two inserts is a reinforcing insert (12) for the crimping of the sleeve (9) at a first axial connector end of this rigid element, and **in that** the other insert is a retaining insert (12') designed to hold in a screwed state a fixing element provided on a connector flange (10) mounted at a second axial connector end of this same rigid element, which is a substantially L-shaped or U-shaped end portion of the hose.

6. Hose (1) as claimed in claim 5, **characterised in that** said first connector end (5a) connects this rigid end element to the flexible tubular element (2) provided with the sleeve (9), said reinforcing insert (12) and optionally said sealing gasket, and **in that** said second connector end comprising said sealing gasket is adapted to be affixed to an element imparting movement to the fluid circulating through the circuit via said connector flange (10).

7. Hose (1) as claimed in claim 6, **characterised in that** said connector flange (10) has an end piece (10b, 10b') covered by a seal (11, 11') of annular section forming said gasket and formed integrally with this end piece, and a smooth or threaded orifice (10c) for fitting this connector flange, which is covered on its internal face by said retaining insert able to prevent creep of the plastic material for preserving the screwed state of said connector element.

8. Hose (1) as claimed in claim 7, **characterised in that** said seal (11') is made by moulding by bi-injection or overmoulding with said end piece (10b'), this seal having a radially internal face integral with this end piece and a radially external face which has a sealing portion (11 b') of a partially substantially toroidal shape which forms an axially internal end of the seal on said end piece and has a maximum external diameter for this seal so that demoulding does not cause a parting line on this seal.

9. Hose (1) as claimed in claim 7, **characterised in that** said seal (11) is formed integrally with said end piece (10b) by a process of overmoulding so that only a part of this seal is integral with the free end (10b) of this end piece, and that the remaining part of the seal is turned over onto the end piece and axially back towards the interior of the latter, this remaining part having no parting line caused by demoulding.

10. Hose (1) as claimed in one of claims 4 to 9, **characterised in that** said connector end (5a) provided with the sleeve (10) that is included in the intermediate or end portion formed by the rigid element, has a plurality of elastic lugs (13) spaced apart in the circumferential direction which are made by moulding with the corresponding rigid tubular element (5) and which are adapted to enable the sleeve (9) to be axially positioned and held in position around this connector end.

11. Hose (1) as claimed in one of the preceding claims, **characterised in that** said or at least one of said rigid tubular element(s) (4, 5) is made from a material based on at least one thermoplastic polymer, such as a polyamide reinforced with glass fibres, and **in that** said or each sealing gasket is made form a material based on at least:
- a cellular thermoplastic polymer or
- an elastomer, in particular a rubber such as a hydrogenated nitrile butadiene rubber (HNBR) or an ethylene-propylene-diene terpolymer (EPDM) or a thermoplastic elastomer such as a thermoplastic vulcanizate (TPV).

12. Air conditioning or power steering circuit for an automotive vehicle, **characterised in that** it incorporates at least one hose (1) as claimed in one of the preceding claims.

13. Air conditioning circuit as claimed in claim 12, **characterised in that** said hose (1) is integrated in a low -pressure loop of the air conditioning circuit, said or at least one of said rigid tubular element(s) made from a plastic material constituting for example a low-pressure connector to the outlet of a pressure reducer of this circuit.

## Patentansprüche

1. Flexibles Teil (1), welches dazu bestimmt ist, ein Fluid in einen Kreislauf, insbesondere zur Klimatisierung oder zur Lenkunterstützung eines Kraftfahrzeugs, zu transportieren, wobei dieses flexible Teil wenigstens ein starres röhrenförmiges Element (4, 5) umfasst, welches an wenigstens einem seiner Anschlussenden durch Bördeln einer metallischen Hülse (6, 9) mit einem flexiblen röhrenförmigen Element (2) verbunden ist, **dadurch gekennzeichnet, dass** dieses starre röhrenförmige Element aus einem Kunststoffmaterial realisiert ist und wenigstens ein Anschlussende besitzt, welches mit einem Dichtungsbelag (11) beschichtet ist, der mit diesem starren Element aus einem Stück ausgebildet ist und von einer geringeren Härte ist als diejenige seines Kunststoffmaterials, wobei der Belag sich auf der radial äußeren Seite dieses axialen Anschlussendes erstreckt.

2. Flexibles Teil (1) nach Anspruch 1, **dadurch gekennzeichnet, dass** dieses starre röhrenförmige Element (4, 5) durch Spritzguss hergestellt ist, wobei der Belag durch Überformung oder Doppelspritzguss an dem oder jedem Anschlussende (5a) angebracht ist.

3. Flexibles Teil (1) nach Anspruch 1 oder 2, **dadurch gekennzeichnet, dass** das starre röhrenförmige Element außerdem entsprechend an seinen zwei axialen Anschlussenden mit wenigstens zwei metallischen Einsätzen (12, 12') versehen ist, wobei wenigstens einer dieser zwei Einsätze ein Verstärkungseinsatz (12) ist, welcher dem starren Element eine ausreichende mechanische Kompressionsfestigkeit für das Bördeln der Hülse (9) verleiht, wobei dieser Verstärkungseinsatz bevorzugt gebildet ist durch einen Ring, welcher gegen die radial innere Seite des entsprechenden Anschlussendes eingesetzt ist.

4. Flexibles Teil (1) nach Anspruch 3, **dadurch gekennzeichnet, dass** jeder dieser zwei Einsätze ein Verstärkungseinsatz (12) für das Bördeln der Hülse (9) ist, wobei das ihn aufnehmende starre Element ein Zwischenstück in dem flexiblen Teil ist, welches in zwei der Anschlussenden endet, welche jeweils mit dem Dichtungsbelag versehen und axial mit zwei flexiblen röhrenförmigen Elementen (2) des flexiblen Teils verbunden sind.

5. Flexibles Teil nach Anspruch 3, **dadurch gekennzeichnet, dass** der eine dieser zwei Einsätze ein Verstärkungseinsatz (12) für das Bördeln der Hülse (9) an einem ersten axialen Anschlussende dieses starren Elements ist, und dass der andere Einsatz ein Stützeinsatz (12') ist, welcher dazu ausgestaltet ist, ein Befestigungselement, mit welchem ein Befestigungsflansch (10) versehen ist, welcher angebracht ist an einem zweiten axialen Anschlussende des selben starren Elements, welches ein Endstück des flexiblen Teils mit einer Form von im Wesentlichen einem L oder einem U ist, im verschraubten Zustand zu halten.

6. Flexibles Teil (1) nach Anspruch 5, **dadurch gekennzeichnet, dass** das erste Anschlussende (5a) das starre Endelement mit dem flexiblen röhrenförmigen Element (2), welches mit der Hülse (9) versehen ist, verbindet, wobei der Verstärkungseinsatz (12) optional für den Dichtungsbelag ist, und dass das zweite Anschlussende, welches den Dichtungsbelag umfasst, angepasst ist, um über den Befestigungsflansch (10) an einem Element zum in Bewegung setzen des in dem Kreislauf zirkulierenden Fluids befestigt zu sein.

7. Flexibles Teil (1) nach Anspruch 6, **dadurch gekennzeichnet, dass** der Befestigungsflansch (10) ein Ansatzstück (10b, 10b'), welches mit einer Dichtung (11, 11') mit ringförmigem Querschnitt beschichtet ist, welche den Belag bildet und mit diesem Ansatzstück aus einem einzigen Stück ausgebildet ist, und eine glatte oder mit einem Gewinde versehene Öffnung (10c) für die Befestigung des Flansches umfasst, welcher auf seiner Innenseite des Stützeinsatzes beschichtet ist, welcher dazu angepasst ist, für das Halten des Befestigungsorgans im verschraubten Zustand, dem Fließen des Kunststoffmaterials entgegenzuwirken.

8. Flexibles Teil (1) nach Anspruch 7, **dadurch gekennzeichnet, dass** die Dichtung (11') erhalten ist durch Doppelspritzguss oder durch Überformung mit dem Ansatzstück (10b'), wobei diese Dichtung eine radial innere Seite, welche an dem Ansatzstück befestigt ist, und eine radial äußere Seite, welche einen teilweise im Wesentlichen torischen Dichtungsabschnitt (11b') umfasst, welcher ein axial inneres Ende der Dichtung an dem Ansatzstück bildet und einen für diese Dichtung maximalen externen Durchmesser aufweist, so dass diese Dichtung ohne Entformungsdichtungsebene ist, aufweist.

9. Flexibles Teil (1) nach Anspruch 7 **dadurch gekennzeichnet, dass** die Dichtung (11) an dem Ansatzstück (10b) durch eine Überformung befestigt ist, sodass nur ein Teil dieser Dichtung an dem freien Ende (10ba) dieses Ansatzstücks befestigt ist, und dass der übrige Teil der Dichtung gegen das Ansatzstück und axial in das Innere des letzteren zurückgewendet ist, wobei dieser übrige Teil ohne Entformungsdichtungsebene ist.

10. Flexibles Teil (1) nach einem der Ansprüche 4 - 9, **dadurch gekennzeichnet, dass** das mit der Hülse (10) versehene Anschlussende (5a), welches das durch das starre Element gebildete Zwischenstück oder Ende umfasst, eine Vielzahl von in der Umfangsrichtung beabstandeten elastischen Lamellen (13) umfasst, welche durch Formung mit dem entsprechenden starren röhrenförmigen Element (5) erhalten sind und welche angepasst sind, um die axiale Positionierung und das Halten in Position der Hülse (9) um das Anschlussende zu ermöglichen.

11. Flexibles Teil (1) nach einem der vorhergehenden Ansprüche, **dadurch gekennzeichnet, dass** das starre röhrenförmige Element oder wenigstens eines der starren röhrenförmigen Elemente (4, 5) realisiert ist aus einem Material auf Basis wenigstens eines thermoplastischen Polymers, wie z. B. glasfaserverstärktes Polyamid, und dass der oder jeder Dichtungsbelag realisiert ist aus einem Material auf Basis von wenigstens:
- einem thermoplastischen zellularen Polymer, oder
- einem Elastomer, insbesondere einem Kautschuk wie z.B. einem hydrilierten Nitrilkautschuk (HNBR) oder einem Ethylen-Propylen-Dien-Terpolymer (EPDM), oder einem thermoplastischen Elastomer, wie z.B. einem thermoplastischen Vulkanisat (TPV).

12. Kreislauf zur Klimatisierung oder Lenkunterstützung für ein Kraftfahrzeug, **dadurch gekennzeichnet, dass** er wenigstens ein flexibles Teil (1) nach einem der vorhergehenden Ansprüche umfasst.

13. Kreislauf zur Klimatisierung nach Anspruch 12, **dadurch gekennzeichnet, dass** das flexible Teil (1) in einer Niederdruckschleife des Klimatisierungskreislaufs integriert ist, wobei das starre röhrenförmige Element oder wenigstens eines der starren röhrenförmigen Elemente (5) aus einem Kunststoffmaterial beispielsweise eine Niederdruckverbindung mit dem Ausgang eines Druckminderers dieses Kreislaufs bildet.
